# EUROPEAN PATENT APPLICATION

(11) **EP 4 686 652 A1**
(43) Date of publication of application: **04.02.2026**
(21) Application number: 25192895.8
(22) Date of filing: 30.07.2025
(51) Int. Cl.: B64C 29/00, B64U 10/20, B64U 30/14, B64U 30/29, B64U 30/40, B64U 60/50, B64U 30/12, B64U 10/16, B64U 10/25

(54) **A VERTICAL TAKE-OFF AND LANDING AERIAL VEHICLE**

(30) Priority: 30.07.2024 IN 202421057744
(71) Applicant: Ideaforge Technology Limited, Navi Mumbai Maharashtra 400710 (IN)
(72) Inventor: SINGH, Rahul, 400710 Navi Mumbai (IN); KHANDERAO, Venkata Krishna Rao, 400710 Navi Mumbai (IN); MEHTA, Ankit, 400710 Navi Mumbai (IN); GUMMALLA, Shankar, 400710 Navi Mumbai (IN); PANDURANGI, Pradeep, 400710 Navi Mumbai (IN); THAKUR, Amit Mohan, 400710 Navi Mumbai (IN); GARG, Ankit, 400710 Navi Mumbai (IN); JHA, Sunil, 400710 Navi Mumbai (IN)
(74) Representative: Swea IP Law AB

(57) **Abstract**

An aerial vehicle (100) includes a fuselage (102) having an angular frame (102A); a fixed wing (104) fixed on an upper side of the fuselage (102); at least two sets of first propeller-rotors and second propeller-rotors each comprising four propeller-rotors (206A,208A) configured at ends of a set of first rotor arms (106B-1 to 106B-3) and a set of second rotor arms (108B-1 to 108B-3) positioned on an underside of the aerial vehicle (100) for vertical lift of the aerial vehicle (100). The first rotor arms (106B-1 to 106B-3) and the second rotor arms (108B-1 to 108B-3) are any or a combination of X-shaped, H-shaped and K-shaped. The aerial vehicle (100) includes a predefined empennage (110) configured to the fuselage (102) for enabling flight of the VTOL aerial vehicle (100) after the vertical lift of the aerial vehicle (100).

## Description

### TECHNICAL FIELD

The present disclosure relates generally to the field of aerial vehicles. In particular, it pertains to an optimized fixed wing Vertical Take-off and Landing (VTOL) aerial vehicle.

### BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

Unmanned Aerial Vehicles (UAVs) with a multi-copter configuration have become increasingly vital across various sectors, including military, commercial, and recreational use. These vehicles, which operate without a human pilot on-board, rely heavily on sophisticated control systems and robust designs to ensure stability, manoeuvrability, and reliability, especially in critical missions or adverse conditions. One of the significant advantages of the multi-copter AV technology is their Vertical Take-Off and Landing (VTOL) capability. Using this capability, AVs can ascend, descend, and hover vertically, eliminating the need for conventional runways and enabling operation in confined spaces.

Redundancy in rotor systems is a critical design consideration for enhancing AV reliability and safety. In the event of a rotor failure, the remaining rotors must compensate to maintain control, maintain the performance and prevent any catastrophic failure / incident. This redundancy is essential for high-stakes missions where AV failure could lead to significant losses or safety hazards. Incorporating a specific number of rotors into a specific AV design provides several advantages. The rotors contribute to a more balanced and stable flight, as the thrust can be distributed more evenly across the AV. Moreover, specific number of rotors, the AV has more points of thrust control, allowing for finer adjustments and more precise manoeuvring.

A fixed wing VTOL aerial vehicle combines the vertical take-off and landing capabilities of a conventional multi-copter aerial vehicle, and efficiency, speed, and range of a normal fixed-wing aircraft. Thus, a fixed wing VTOL aerial vehicle can take-off and land vertically like helicopter AVs, and transit to cruise flight like airplanes, offering advantages like no landing place restrictions, and that of long-range and high-speed characteristics. A Typical fixed-wing VTOL AV consists of rotor-blade arms along with fixed wings; and their integration in a single Aerial Vehicle.

While increasing the number of rotors for improved performance of conventional multi-copter AVs is well documented, the fixed-wing VTOL AVs can also benefit from an increase in the number of rotors. However, increasing the number of rotors leads to increased weight on account of additional rotors themselves, as well as on account of additional support structure, partly offsetting the additional lift capability. Besides, more rotors also mean more complex algorithms to control their rotation during the flight. While the conventional multi-copter AVs have advantage of a point symmetrical distribution of the rotors configured around a centre of gravity at equal distance, which makes the operation of control of the rotors comparatively simple, such an advantage is generally not available with the fixed wing VTOL AVs.

There is, therefore, a need in the art to provide an efficient fixed-wing Vertical Take-off and Landing aerial vehicle with an optimized distribution of rotors.

### OBJECTS OF THE INVENTION

A general object of the present disclosure is to provide an improved and efficient fixed wing Vertical Take-off and Landing aerial vehicle.

Another object of the present disclosure is to provide a fixed wing VTOL vehicle with increased rotors to increase lift capability of the AV.

Another object of the present disclosure is to provide a fixed wing VTOL vehicle with optimized distribution of the increased rotors that simplifies installation and operation of the rotors.

Another object of the present disclosure is to provide a fixed wing VTOL vehicle with a modular distribution of the rotors to simplify their operation.

Yet another object of the present disclosure is to provide a fixed wing VTOL aerial vehicle with can be used both as a hybrid fixed wing VTOL AV, and as a conventional VTOL multi-copter AV.

These and other objects of the present invention will become readily apparent from the following detailed description taken in conjunction with the accompanying drawings.

### SUMMARY

Aspects of the present disclosure pertain to aerial vehicles. In particular, the present disclosure pertains to an optimized fixed wing Vertical Take-off and Landing (VTOL) aerial vehicle.

According to an aspect, the disclosed aerial vehicle includes a fuselage, and at least two sets of propeller-rotors. Each set of propeller-rotor includes four propeller-rotors configured at ends of a set of X-shaped rotor arms for providing vertical lift of the aerial vehicle. The X-shaped rotor arms are positioned adjacent to one another and fixed to an underside the fuselage.

In an embodiment, the aerial vehicle may include a fixed wing. The fixed wing may be fixed on an upper side of the fuselage.

In the above embodiment, the fixed wing may be detachably coupled to the fuselage, such that the aerial vehicle functions as a conventional multi-copter aerial vehicle after detaching the fixed wing. In the conventional multi-copter aerial vehicle mode, the predefined empennage may be detachability coupled.

In an embodiment, the fixed wing may be rotatably coupled to the fuselage for ease of portability and packaging.

In an embodiment, the two sets of X-shaped rotor arms may be configured to such that the propeller-rotors of the two sets of propeller-rotors are located on two parallel lines on two sides of the fuselage.

In an embodiment, the aerial vehicle may include a predefined empennage configured at rear end of the fuselage. The predefined empennage may enable flight of the aerial vehicle after the vertical lift.

In the above embodiment, the predefined empennage may include a V-shaped stabilizer and a pusher rotor. The pusher rotor may be configured at rear end of the fuselage.

In an embodiment, the fuselage may include an angular frame for reduction in weight.

According to another aspect of the present disclosure, the proposed aerial vehicle includes a fuselage, at least two sets of propeller-rotors each comprising four propeller-rotors configured at ends of a set of rotor arms positioned on an underside of the fuselage for providing vertical lift of the aerial vehicle. The sets of rotor arms are any or a combination of H-shaped and K-shaped.

In an embodiment, the aerial vehicle may include a fixed wing. The fixed wing may be fixed on an upper side of the fuselage.

In the above embodiment, the fixed wing may be detachably coupled to the fuselage such that the aerial vehicle functions as a conventional multi-copter aerial vehicle after detaching the fixed wing. . In the conventional multi-copter aerial vehicle mode, the predefined empennage is also detachability coupled.

In an embodiment, the fixed wing may be rotatably coupled to the fuselage for ease of portability and packaging.

In an embodiment, the two sets of K-shaped rotor arms and H-shaped rotor arms may be configured such that the propeller-rotors of the two sets of propeller-rotors are located on two parallel lines on two sides of the fuselage.

In an embodiment, the aerial vehicle may include a predefined empennage configured at rear end of the fuselage. The predefined empennage may enable flight of the aerial vehicle after the vertical lift.

In the above embodiment, the predefined empennage may include a U-shaped stabilizer, and two pusher rotors configured on legs of the U-shaped stabilizer.

In an embodiment, the fuselage may include an angular frame for reduction in weight.

In an embodiment, the rotor arms corresponding to each of the two sets of propeller-rotors may be K-shaped. One of the two K-shaped rotor arms may be a flipped K-shaped rotor arm.

In an embodiment, the rotor arms corresponding to each of the at least two sets of propeller-rotors may be K-shaped and arranged such that K-shapes of the two sets of rotor arms face in the same direction.

In an embodiment, the K-shaped rotor arms may include one transverse rod and two oblique rods fixed to a mid-point of the transverse rod.

In an embodiment, the K-shaped rotor arms may include one transverse rod and two oblique rods fixed to the fuselage at a point close to the transverse rod.

In an embodiment, two oblique rods may be pivotally fixed to the mid-point of the transverse rod or to the fuselage through an actuator.

In an embodiment, the rotor arms corresponding to each of the two sets of propeller-rotors may be H-shaped. Each propeller-rotor may include two parallelly arranged transverse rods creating a ladder type structure.

In an embodiment, a rear most transverse rod of the rotor arms may be configured as a stabilizer.

In an embodiment, the transverse rod of the rotor arms located ahead of the fixed wing of the aerial vehicle may be configured as an elevator.

In an embodiment, the stabilizer or the elevator may include movable flaps to produce more lift, control pitch, produce drag, trim or modify airflow, to control flight path of the aerial vehicle.

Various objects, features, aspects and advantages of the inventive subject matter will become more apparent from the following detailed description of preferred embodiments, along with the accompanying drawing figures in which like numerals represent like components.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIGs. 1A to 1D illustrate schematic views of the proposed fixed wing Vertical Take-off and Landing (VTOL) aerial vehicle with two sets of X-shaped propeller-rotors, in accordance with embodiments of the present disclosure.
FIG. 2 illustrates a schematic view showing a fuselage frame of the aerial vehicle with a combination of K-shaped arms and H-shaped arms for supporting propeller-rotors, in accordance with embodiments of the present disclosure.
FIG. 3 illustrates a schematic view showing a fuselage frame of the aerial vehicle with two sets of flipped K-shaped arms for supporting propeller-rotors, in accordance with embodiments of the present disclosure.
FIG. 4 illustrates a schematic view showing a fuselage frame of the aerial vehicle with sets of H-shaped arms for supporting propeller-rotors, in accordance with embodiments of the present disclosure.
FIGs. 5A and 5B illustrate schematic views showing a fuselage frame of the aerial vehicle with two sets of K-shaped arms for supporting propeller-rotors, in accordance with embodiments of the present disclosure

### DETAILED DESCRIPTION

The following is a detailed description of embodiments of the disclosure depicted in the accompanying drawings. The embodiments are in such details as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

Embodiments of the present disclosure relate to a hybrid fixed wing vertical take-off and landing aerial vehicle optimizes the rotors by including at least two sets of modular propeller rotors with similar or different configurations.

According to an aspect, the disclosed aerial vehicle includes a fuselage, a fixed wing fixed on an upper side of the fuselage, two sets of propeller-rotors configured underside of the aerial vehicle at ends of two rotor arms respectively for vertical lift of the aerial vehicle. The two rotor arms are any or a combination of X-shaped, H-shaped, and K-shaped. In addition, the aerial vehicle includes a predefined empennage configured to the fuselage for enabling flight of the VTOL aerial vehicle after the vertical lift of the aerial vehicle. Further, the fixed wing is detachable, such that use of the fixed wing is optional, when operated without the fixed wing, the aerial vehicle functions as a conventional VTOL multi-copter, and when used with the fixed wing it functions as a hybrid fixed wing VTOL.

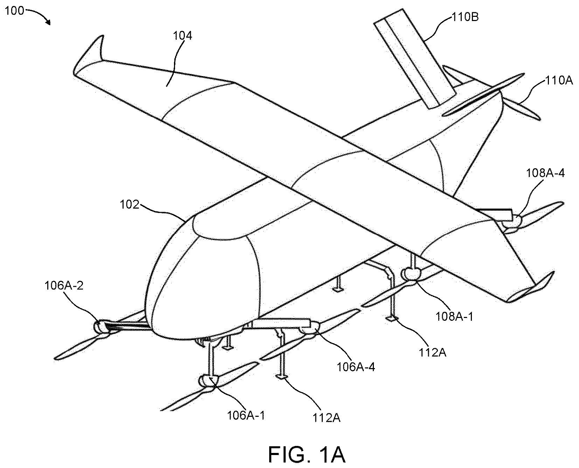

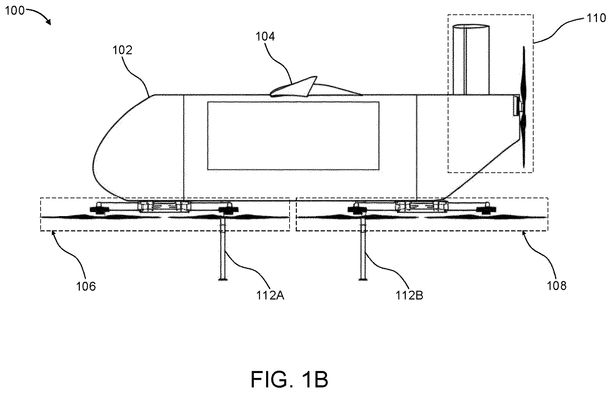

Referring now to FIGs. 1A to 1D where a schematic view of the proposed aerial vehicle with X-shaped rotor system is disclosed, the aerial vehicle (hereinafter referred as "aerial vehicle 100") includes a fuselage 102, a fixed wing 104, and a VTOL portion defining at least two sets of propeller-rotor assemblies 106, 108 having an X-shaped, H-shaped, or K-shaped configuration, and a predefined empennage 110.

The propeller-rotor assemblies 106, 108 are configured on an underside of a fuselage 102, and include at least two sets of propeller-rotors. Each set of propeller-rotors includes four propeller-rotors 106A-1 to 106A-4, 108A-1 to 108A-4 configured at ends of a set of X-shaped rotor arms 106B-1,108B-1 positioned adjacent to one another and fixed to an underside of the fuselage 102 for vertical lift of the aerial vehicle 100.

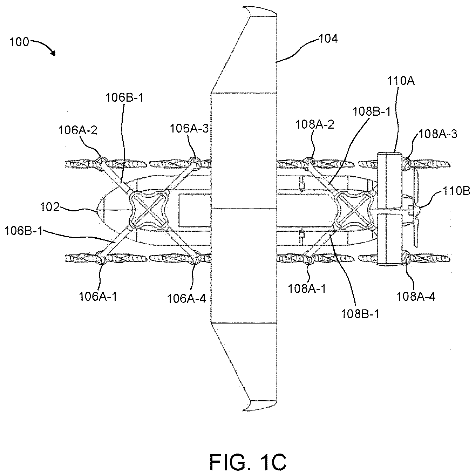

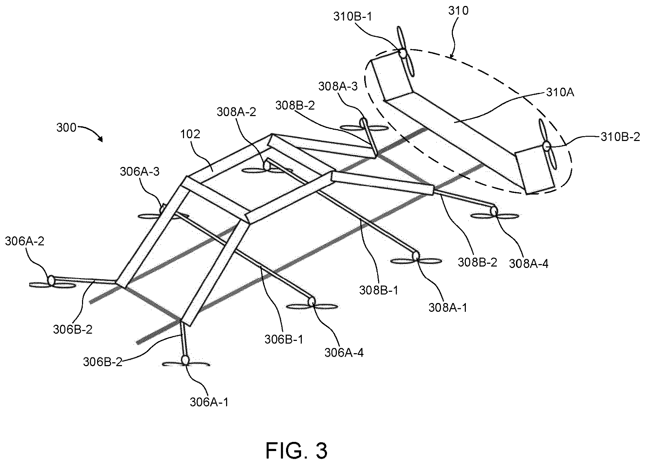

Each having four vertical take-off rotors or propeller rotors 106A-1 to 106A-4, 108A-1 to 108A-4, such as rotors 106A-1, 106A-2, 106A-3 and 106A-4 belonging to a first set of the propeller rotors 106A-1 to 106A-4, and rotors 108A-1, 108A-2, 108A-3 and 108A-4 belonging to a second set of propeller rotors 108A-1 to 108A-4 (refer to FIG. 3), for enabling vertical lift and thrust. Each of the first and second propeller rotors 106A-1 to 106A-4, 108A-1 to 108A-4, include corresponding first propellers 106C-1 to 106C-4, and second propellers 108C-1 to 108C-4 shown in FIG. 1C.

In an embodiment, each set of propeller rotors 106A-1 to 106A-4, 108A-1 to 108A-4 assembled on the respective X-shaped rotor arms 106B-1,108B-1 that defines a corresponding X-shaped support structure. The X-shaped support structure may include two cylindrical rods arranged in a crossed configuration. The X-shaped rotor arms 106B-1,108B-1 can be fixed on the underside of the fuselage 102 of the aerial vehicle 100. The propeller rotors 106A-1 to 106A-4, 108A-1 to 108A-4 may be configured on ends of the respective X- shaped rotor arms 106B-1,108B-1. In an embodiment, the X-shaped support structure may include four cylindrical rods arranged in two intersecting pairs, with each pair forming a diagonal line that crosses the other at a central point to define an X-shaped configuration.

The two sets of X-shaped rotor arms 106B-1, 108B-1 are configured such that the propeller-rotors 106A-1 to 106A-4,108A-1 to 108A-4 may be located on two parallel lines on two sides of the fuselage 102.

In an embodiment, the fixed wing 104 is fixed on an upper side of the fuselage 102. The fixed wing 104 is rotatably coupled to the fuselage 102 for ease of portability, packaging, and moreover can easily be packed and transported and deployed quickly. The fixed wing 104 is detachably coupled to the fuselage 102 such that the aerial vehicle 100, after detaching the fixed wing 104, functions as a conventional multi-copter aerial vehicle. In one embodiment, the fixed wing 104 can be of foldable configuration such that it can be folded while not in use.

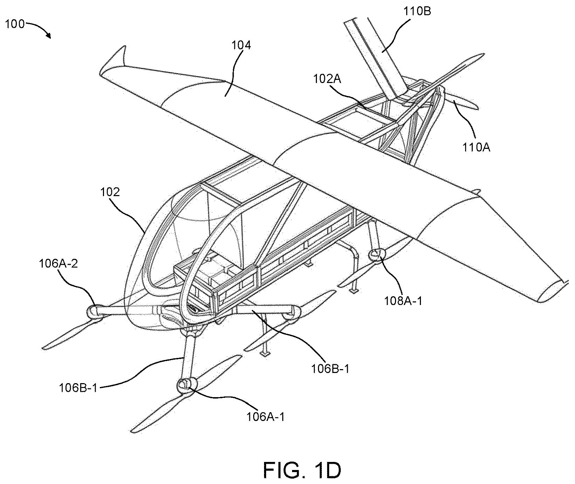

In an embodiment, the fuselage 102 includes an angular frame 102A for reduction in weight. The angular frame 102A for accommodating, including but not limited to, payload, passenger, battery, and avionics of the aerial vehicle 100 as shown in FIG.1D. The angular frame 102A of the fuselage 102 facilitates easy access to the payload, battery, and avionics from the front, rear, and both sides of the fuselage 102. In addition, the fuselage 102 separates the VTOL portion and the fixed wing 104 portion such that the fixed wing 104 may not shadow the VTOL portion, preventing vertical lift losses.

In an embodiment, the predefined empennage 110 configured on a rear end of the fuselage 102 for providing a horizontal thrust to the aerial vehicle 100. The predefined empennage 110 enables flight of the aerial vehicle 100 after the vertical lift of the aerial vehicle 100. The predefined empennage 110 may include a V-shaped stabilizer 110A or Canard, and a pusher rotor or tail rotor 110B configured at the rear end of the fuselage 102. In an exemplary embodiment, the V-shaped stabilizer 110A can include one or more ruddervators for rotation around the longitudinal and vertical axis of the aerial vehicle 100. In an exemplary embodiment, the aerial vehicle 100 can be used as a rotor-craft without the pre-defined empennage 110.In an embodiment, the aerial vehicle 100 can includes a plurality of bracings. Each of the plurality of bracings can be configured for supporting each of the plurality of propeller rotors 106,108 over the each of the at least two sets of rotor arms 106B,108B thereby enabling the aerial vehicle 100 to maintain strength and stability upon non-functioning of the vertical take-off rotors 106A-1 to 106A-4, 108A-1 to 108A-4. In one embodiment, the support bracings can be used as control surfaces.

In an embodiment, the aerial vehicle 100 can include at least two landing gears 112A, 112B that can be configured on the underside of the hollow fuselage 102 for supporting the aerial vehicle 100 on ground surface such that the rotors do not hit the ground.

Thus, the present disclosure provides the aerial vehicle 100 that incorporates better control and stability of the VTOL structure that results maintaining a stable flight even when one or more vertical take-off rotors 106A, 106B becomes non-functional during flight.

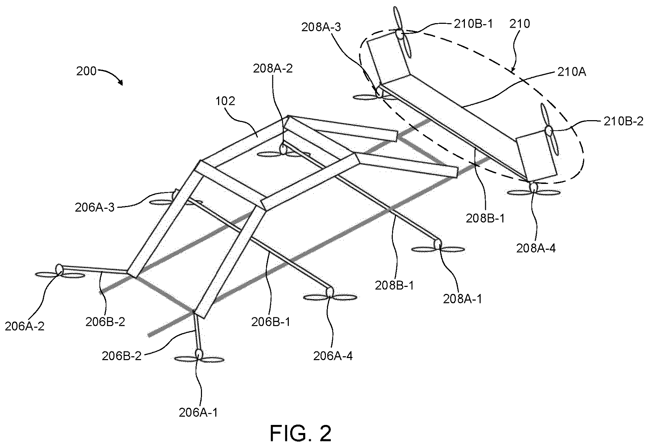

Referring now to FIGs. 2 where a schematic view of the proposed aerial vehicle with any combination of H-shaped propeller-rotor assembly and K-shaped propeller-rotor assembly is disclosed, the aerial vehicle (hereinafter referred as "aerial vehicle 200") includes a fuselage 102, a fixed wing 104, and a VTOL portion defining at least two sets of propeller-rotor assemblies 206, 208 having any of H-shaped, or K-shaped configuration or a combination of H-shaped, or K-shaped configuration, and a predefined empennage 110. The fixed wing 104 is detachably coupled to the fuselage 102 such that the aerial vehicle 200, after detaching the fixed wing 104, functions as a conventional multi-copter aerial vehicle. The fixed wing 104 is rotatably coupled to the fuselage 102 for ease of portability and packaging.

The two sets of propeller-rotor assemblies 206, 208 includes, at least four first propeller-rotors 206A-1 to 206A-4, at least four second propeller-rotors 208A-1 to 208A-4, and at least one K-shaped rotor arm 206B, and at least one H-shaped rotor arm 208B face in the same direction same that of the flipped K-shaped rotor arm 206B.

The at least four first propeller rotors 206A-1 to 206A-4, 208A-1 to 208A-4 may be configured on ends of the K-shaped rotor arm 206B, and the at least four second propeller rotors 308A-1 to 308A-4 may be configured on ends of the H-shaped rotor arm 208B.

The first and second propeller-rotors 206A-1 to 206A-4,208A-1 to 208A-4 of the two sets of propeller-rotors may be located on two parallel lines on two sides of the fuselage 102.

The K-shaped rotor arms 206B may comprise a transverse rod 206B-1 and two oblique rods 206B-2 extending at an angle from the transverse rod 206B-1, forming a K-like configuration. The H-shaped rotor arms 208B may comprise two parallel transverse rods 208B-1, forming an H-like configuration when fixed underneath the fuselage 102.

The K-shaped rotor arm 206B and H-shaped rotor arm 208B can be fixed on the underside of the fuselage 102 of the aerial vehicle 100.

Further, the predefined empennage 210 may include a U-shaped stabilizer 210A, and at least two pusher rotors 210B-1,210B-2 configured on legs or vertical stabilizers of the U-shaped stabilizer 210A. In an exemplary embodiment, the aerial vehicle 200 can be used as a rotor-craft without the pre-defined empennage 210.

Referring now to FIGs. 3 where a schematic view of the proposed aerial vehicle with any combination of K-shaped propeller-rotor assembly and flipped K-shaped propeller-rotor assembly is disclosed, the aerial vehicle (hereinafter referred as "aerial vehicle 300") includes a fuselage 102, and a VTOL portion defining at least two sets of propeller-rotor assemblies 306, 308 having a combination of K-shaped and flipped K-shaped configuration, and a predefined empennage 310.

The two sets of propeller-rotor assemblies 306, 308 includes, at least four first propeller-rotors 306A-1 to 306A-4, at least four second propeller-rotors 308A-1 to 308A-4, and at least one flipped K-shaped rotor arm 306B, and at least one K-shaped rotor arm 308B face in the same direction same that of the flipped K-shaped rotor arm 306B.

The at least four first propeller rotors 306A-1 to 306A-4, 308A-1 to 308A-4 may be configured on ends of the flipped K-shaped rotor arm 306B, and the at least four second propeller rotors 308A-1 to 308A-4 may be configured on ends of the K-shaped rotor arm 308B.

The flipped K-shaped rotor arm 306B and the K-shaped rotor arm 308B are configured such that the first and second propeller-rotors 306A-1 to 306A-4,308A-1 to 308A-4 of the two sets of propeller-rotors may be located on two parallel lines on two sides of the fuselage 102.

In an embodiment, each of the flipped K-shaped rotor arm 306B and the flipped K-shaped rotor arm 308B may comprise a transverse rod 306B-1, 308B-1 and two oblique rods 306B-2, 308B-2 extending at an angle from the transverse rod 306B-1, 308B-1, forming a K-like configuration.

In another embodiment, the combination of flipped K-shaped rotor arm 306B and K-shaped rotor arm 308B can be fixed underside of the fuselage 102 of the aerial vehicle 300.

In an exemplary embodiment, among the two K-shaped rotor arms, the one towards rear can be 'flipped K'-shaped for facilitating ease of access to payload portion and a battery bay portion from front as well as both sides of the fuselage 102 while maintaining static and dynamic structural integrity of the aerial vehicle 300.

Further, the predefined empennage 310 may include a U-shaped stabilizer 310A, and at least two pusher rotors 310B-1,310B-2 configured on legs of the U-shaped stabilizer 310A.

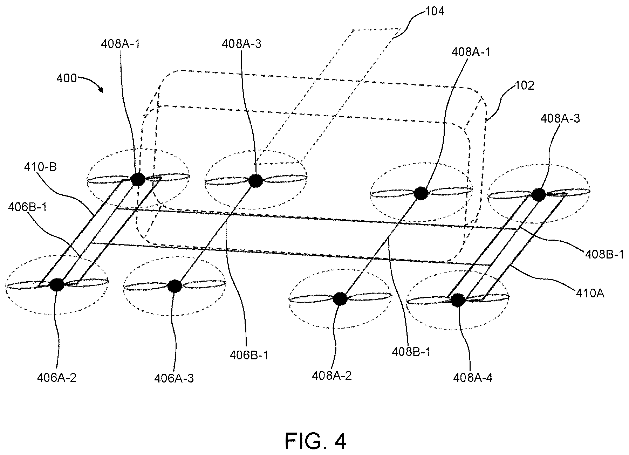

Referring now to FIGs. 4 where a schematic view of the proposed aerial vehicle with two sets of H-shaped propeller-rotor assemblies is disclosed, the aerial vehicle (hereinafter referred as "aerial vehicle 400") includes a fuselage 102, a fixed wing 104, and a VTOL portion defining at least two sets of propeller-rotor assemblies 406, 408 having a H-shaped configuration.

The two sets of propeller-rotor assemblies 406, 408 includes, at least four first propeller-rotors 406A-1 to 406A-4, at least four second propeller-rotors 408A-1 to 408A-4, and at least two H-shaped rotor arms 406B,408B arranged or positioned side by side.

Each H-shaped rotor arms 406B, 408B may include two parallelly arranged transverse rods 406B-1,408B-1, creating a ladder-type structure. The two sets of H-shaped rotor arms 406B, 408B are configured such that the first and the second propeller-rotors 406A-1 to 406A-4, 408A-1 to 408A-4 of the two sets of propeller-rotor assemblies 406, 108 may be located on two parallel lines on two sides of the fuselage 102.

The two parallel transverse rods 406B-1,408B-1 are connected by a central oblique cross-member rod 406B-2,408B-2, forming an H-like configuration.

The combination of two H-shaped rotor arms 406B, 408B defining a ladder-type structure, may be fixed on the underside of the fuselage 102 of the aerial vehicle 400. The first and the second propeller rotors 406A-1 to 406A-4, 408A-1 to 408A-4 may be configured on ends of the respective H-shaped rotor arm 406B, 408B. In an exemplary embodiment, the two H-shaped rotor arms 106B-3, 108B-3 may be positioned adjacent to each other in parallel alignment beneath the fuselage 102.

A rear most transverse rod 406B-1, 408B-1 of the H-shaped rotor arm 406B, 408B of the set of propeller-rotors is configured as a stabilizer 410A. Further, the transverse rod 406B-1,408B-1 of the H-shaped rotor arm 406B, 408B of the set of propeller-rotors located ahead of the fixed wing 104 is configured as an elevator 410B. The stabilizer 410A or the elevator 410B of the aerial vehicle 400 may include movable flaps to produce more lift, control pitch, produce drag, trim or modify airflow, to control flight path of the aerial vehicle 400.

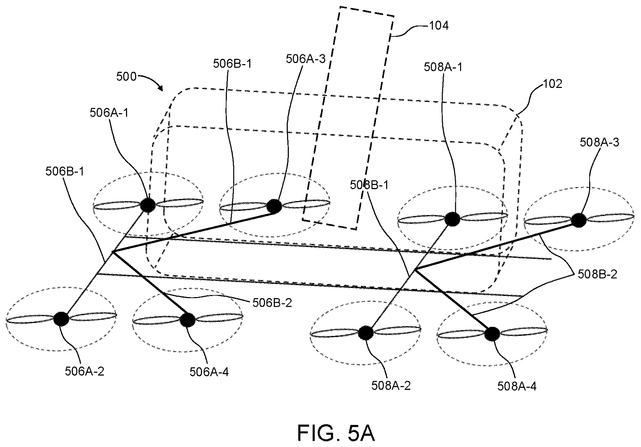

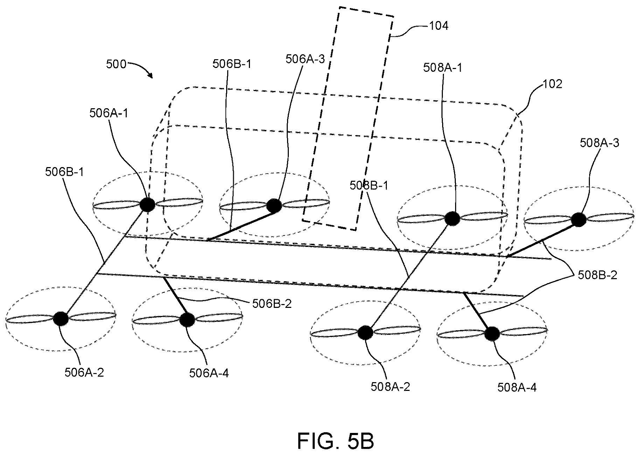

Referring now to FIGs. 5A and 5B where a schematic view of the proposed aerial vehicle with two sets of K-shaped propeller-rotor assemblies is disclosed, the aerial vehicle (hereinafter referred as "aerial vehicle 500") includes a fuselage 102, a fixed wing 104, and a VTOL portion defining at least two sets of propeller-rotor assemblies 506, 508 having a K-shaped configuration.

The two sets of propeller-rotor assemblies 506, 508 includes, at least four first propeller-rotors 506A-1 to 506A-4, at least four second propeller-rotors 508A-1 to 508A-4, and at least two K-shaped rotor arms 506B,508B arranged or positioned side by side. The two K-shaped rotor arms 506B, 508B are configured such that the first and the second propeller-rotors 506A-1 to 506A-4, 508A-1 to 508A-4 of the two sets of propeller-rotors may be located on the two K-shaped rotor arms 506B, 508B respectively in two parallel lines on two sides of the fuselage 102.

In an embodiment, each K-shaped rotor arm 506B, 508B may include a transverse rod 506B-1, 508B-2 and two oblique rods 506B-2, 508B-2 extending at an angle from the respective transverse rod 506B-1, 508B-1 where the two oblique rods 506B-2, 508B-2 fixed to a mid-point of the transverse rod 506B-1, 508B-1 forming a K-like configuration as seen in FIG.5A. In another embodiment, the transverse rod 506B-1, 508B-1 and two oblique rods 506B-2, 508B-2 of each K-shaped rotor arm 506B, 508B may be fixed to the fuselage 102 at a point close to the transverse rod 506B-1, 508B-1 as seen in FIG.5B. Further, the two oblique rods. 506B-2 and 508B-2 are pivotally fixed to the fuselage 102 through an actuator 512.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE INVENTION

The present disclosure provides an improved and efficient Vertical Take-off and Landing (VTOL) vehicle.

The present disclosure provides an improved and efficient fixed wing Vertical Take-off and Landing aerial vehicle.

The present disclosure provides a fixed wing VTOL vehicle with increased rotors to increase lift capability of the AV.

The present disclosure provides a fixed wing VTOL vehicle with optimized distribution of the increased rotors that simplifies installation and operation of the rotors.

The present disclosure provides a fixed wing VTOL vehicle with a modular distribution of the rotors to simplify their operation.

The present disclosure provides a fixed wing VTOL aerial vehicle with can be used both as a hybrid fixed wing VTOL AV and as a conventional VTOL multi-copter AV.

## Claims

1. An aerial vehicle (100), comprising:
a fuselage (102);
at least two sets of propeller-rotors each comprising four propeller-rotors (106A,108A) configured at ends of to a set of X-shaped rotor arms (106B,108B) positioned adjacent to one another and fixed to an underside the fuselage (102) for providing vertical lift of the aerial vehicle (100)

2. The aerial vehicle (100) as claimed in claim 1, wherein aerial vehicle (100) comprises a fixed wing (104) fixed on an upper side of the fuselage (102).

3. The aerial vehicle (100) as claimed in claim 2, wherein the fixed wing (104) is detachably coupled to the fuselage (102) such that the aerial vehicle (100), after detaching the fixed wing (104), functions as a conventional multi-copter aerial vehicle.

4. The aerial vehicle (100) as claimed in claim 2, wherein the fixed wing (104) is rotatably coupled to the fuselage (102) for ease of portability and packaging.

5. The aerial vehicle (100) as claimed in claim 1, wherein at least two sets of X-shaped rotor arms (106B,108B) are configured such that the propeller-rotors (106A,108A) of the two sets of propeller-rotors are located on two parallel lines on two sides of the fuselage (102).

6. The aerial vehicle (100) as claimed in claim 1, wherein the aerial vehicle (100), comprises a predefined empennage (110) configured at rear end of the fuselage (102) to enable flight of the aerial vehicle (100) after the vertical lift of the aerial vehicle (100).

7. The aerial vehicle (100) as claimed in claim 6, wherein the predefined empennage (110) comprises a V-shaped stabilizer (110A), and a pusher rotor (110B) configured at rear end of the fuselage (102).

8. The aerial vehicle (100) as claimed in claim 1, wherein the fuselage (102) comprises of an angular frame (102A) for reduction in weight.

9. An aerial vehicle (200) comprising:
a fuselage (102);
at least two sets of propeller-rotors each comprising four propeller-rotors (206A,208A) configured at ends of to a set of rotor arms (206B,208B) positioned on an underside of the fuselage (102) for vertical lift of the aerial vehicle (100), wherein the sets of rotor arms (206B,208B) are any or a combination of H-shaped and K-shaped

10. The aerial vehicle (200) as claimed in claim 9, wherein aerial vehicle (100) comprises a fixed wing (104) fixed on an upper side of the fuselage (102).

11. The aerial vehicle (200) as claimed in claim 10, wherein the fixed wing (104) is detachably coupled to the fuselage (102) such that the aerial vehicle (200), after detaching the fixed wing (104), functions as a conventional multi-copter aerial vehicle.

12. The aerial vehicle (200) as claimed in claim 10, wherein the fixed wing (104) is rotatably coupled to the fuselage (102) for ease of portability and packaging.

13. The aerial vehicle (200) as claimed in claim 9, wherein at least two sets of K-shaped rotor arms (206B,208B) and H-shaped rotor arms (206B,208B) are configured such that the propeller-rotors (206A,208A) of the two sets of propeller-rotors are located on two parallel lines on two sides of the fuselage (102).

14. The aerial vehicle (200) as claimed in claim 9, wherein the aerial vehicle (100), comprises a predefined empennage (210) configured at rear end of the fuselage (102) to enable flight of the aerial vehicle (200) after the vertical lift of the aerial vehicle (200).

15. The aerial vehicle (200) as claimed in claim 14, wherein the predefined empennage (210) comprises a U-shaped stabilizer (210A), and at least two pusher rotors (210B-1,210B-2) configured on legs of the U-shaped stabilizer (210A).

16. The aerial vehicle (200) as claimed in claim 9, wherein the fuselage (102) comprises an angular frame (102A) for reduction in weight.

17. The aerial vehicle (300) as claimed in claim 9, wherein rotor arms (306B,308B) corresponding to each of the at least two sets of propeller-rotors is K-shaped and one of the two K-shaped rotor arms (306B,308B) is a flipped K-shaped rotor arms (306B,308B).

18. The aerial vehicle (300) as claimed in claim 9, wherein rotor arms (306B, 308B) corresponding to each of the at least two sets of propeller-rotors is K-shaped and K-shapes of the rotor arms (306B, 308B) face in the same direction.

19. The aerial vehicle (500) as claimed in claim 9, wherein the K-shaped rotor arms (506B,508B) comprises one transverse rod (506B-1,508B-1) and two oblique rods (506B-2,508B-2) fixed to a mid-point of the transverse rod (506B-1,508B-1).

20. The aerial vehicle (500) as claimed in claim 9, wherein the K-shaped rotor arms (506B,508B) comprises one transverse rod (506B-1,508B-1) and two oblique rods (506B-2,508B-2) fixed to the fuselage (102) at a point close to the transverse rod (506B-1,508B-1).

21. The aerial vehicle (500) as claimed in claims 19 or claim 20, wherein the two oblique rods (506B-2,508B-2) are pivotally fixed to the mid-point of the transverse rod (506B-1,508B-1) or to the fuselage (102) through an actuator (112).

22. The aerial vehicle (400) as claimed in claim 9, wherein the rotor arms (406B,408B) corresponding to each of the at least two sets of propeller-rotors (406A,408A) is H-shaped, each comprising two parallelly arranged transverse rods (406B-1,408B-1) , creating a ladder type structure.

23. The aerial vehicle (400) as claimed in any of claim 19, claim 20 or claim 22, wherein a rear most transverse rod (406B-1, 408B-1) of the rotor arms (406B, 408B) of the set of propeller-rotors is configured as a stabilizer (410A).

24. The aerial vehicle (400) as claimed in any of claim 19, claim 20 or claim 22, wherein the transverse rod (406B-1,408B-1) of the rotor arms (406B,408B) of the set of propeller-rotors located ahead of the fixed wing (104) of the aerial vehicle (400) is configured as an elevator (410B).

25. The aerial vehicle (400) as claimed in any of claim 23 or claim 24, wherein the stabilizer (410A) or the elevator (410B) comprises movable flaps to produce more lift, control pitch, produce drag, trim or modify airflow, to control flight path of the aerial vehicle (400).
